**Europäisches Patentamt**

**European Patent Office**

**Office européen des brevets**

(11) Numéro de publication: **0 211 804**
**B1**

(12) **FASCICULE DE BREVET EUROPEEN**

(45) Date de publication du fascicule du brevet: **25.04.90**

(51) Int. Cl.⁵: **G 01 D 5/26**

(21) Numéro de dépôt: **86810320.1**

(22) Date de dépôt: **16.07.86**

(54) **Système de détection à fibre optique incorporant un capteur à modulation d'intensité.**

(30) Priorité: **30.07.85 FR 8511616**

(43) Date de publication de la demande:
**25.02.87 Bulletin 87/09**

(45) Mention de la délivrance du brevet:
**25.04.90 Bulletin 90/17**

(84) Etats contractants désignés:
**CH DE GB IT LI NL**

(56) Documents cités:
**EP-A-0 021 199**
**GB-A-2 056 672**
**GB-A-2 096 762**

(73) Titulaire: **CENTRE SUISSE D'ELECTRONIQUE ET
DE MICROTECHNIQUE S.A.
Maladière 71
CH-2000 Neuchâtel 7 (CH)**

(72) Inventeur: **Falco, Lucien G.
Rudebins 15
CH-2088 Cressier NE (CH)**
Inventeur: **Parriaux, Olivier M.
Place de la Palud 1
CH-1003 Lausanne VD (CH)**

(74) Mandataire: **Brulliard, Joel
c/o Centre Suisse d'Electronique et de
Microelectronique S.A. Maladière 71
CH-2000 Neuchâtel 7 (CH)**

Courier Press, Leamington Spa, England.

## Description

La présente invention se rapporte aux systèmes optiques de détection et/ou de mesure de la variation d'une grandeur physique ou chimique et concerne plus particulièrement les systèmes dans lesquels la variation de la grandeur à détecter et/ou à mesurer induit une variation de l'intensité de la lumière dans un guide d'ondes optiques.

Les capteurs à fibres optiques à modulation d'intensité trouvent de nombreuses applications pratiques. Lorsque les avantages inhérents à une détection et une transmission optiques (comme par exemple l'immunité aux effets électromagnétiques, la sécurité en atmosphère explosive ou inflammable, la miniaturisation, la simplicité et le coût peu élevé, etc . . .), sont recherchés. Pourtant l'utilisation de ce type de capteurs se trouve limitée par leur faible linéarité, leur manque de précision et surtout le fait que l'intensité lumineuse, qui constitue l'information du capteur, peut être perturbée tout au long du trajet entre le capteur et le détecteur. Par ailleurs le signal reçu, pour un capteur donné, dépend de la longueur de la ligne de transmission entre l'émetteur et le capteur.

Il a déjà été proposé, dans la demande de brevet GB 2096762, un système incorporant un capteur et dans lequel des moyens sont prévus pour compenser les effets d'une variation de la puissance de la source lumineuse, de la sensibilité du récepteur ou de l'atténuation de la fibre. Cette compensation est obtenue grâce au fait que la lumiére incidente est répartie entre deux branches dont l'une incorpore le capteur lui-même et l'autre est utilisée comme branche de référence.

La demande de brevet EP 0021 199 montre un système optique à deux branches, chacune d'entre elles définissant un chemin optique. Le paramètre à mesurer perturbe l'onde lumineuse se propageant selon un des chemins optiques, l'autre onde étant utilisée comme onde de référence. La branche comprenant le capteur incorpore un élément de retard également à deux branches. Celles-ci introduisent une différence de trajet optique d'une demi-longueur d'onde d'où un déphasage de π entre les deux ondes. Ces deux ondes, en se recombinant, se retranchent l'une de l'autre. Le signal résultant se trouve alors être soit en phase, soit en opposition de phase avec l'onde de référence, ce qui permet de détecter si la valeuer du paramètre est supérieure ou inférieure à un seuil prédéterminé. L'information de phase produite par ce système est une information purement digitale.

Les systèmes décrits nécessitent une cellule captrice complexe. De telles réalisations sont donc coûteuses et se prêtent donc mal aux applications dans lesquelles un grand nombre de capteurs serait nécessaire.

Un objet de la présente invention est un système de détection à fibre optique incorporant un capteur à modulation d'intensité et ne présentant pas les inconvénients mentionnés ci-dessus.

Un autre objet de l'invention est un système detéction et/ou de mesure assurant une autocalibration.

Un autre objet de l'invention est un système permettant la détection et/ou la mesure de plusieurs grandeurs physiques ou chimiques à l'aide d'autant de capteurs connectés en série.

Un autre objet de l'invention es un système detéction et/ou de mesure, à la fois simple, sensible et précis et peu coûteux.

Les caractéristiques de l'invention apparaitront dans les revendications.

L'invention repose sur une modulation du signal lumineux liée à l'utilisation d'une cavité résonnante dans laquelle est incorporé le capteur sensible à la grandeur à détecter ou à mesurer. Cette cavité résonnante réalise la transformation de la modulation d'intensité engendrée par le capteur en une information de phase. Les avantages principaux du système sont la simplicité de la tête captrice, car la cavité résonnante peut être constituée par une unique fibre optique, et l'indépendance de l'information transmise aux variations de la lumière émise par la source de même qu'aux phénomènes transitoires influençant le milieu de transmission de l'information.

D'autres objets, caractéristiques et avantages de la présente invention apparaitront plus clairement à la lecture de la description suivante d'un exemple d'applicaiton particulier, ladite description étant faite à titre purement illustratif et en relation avec les dessins joints dans lesquels:

— la figure 1 est un schéma explicatif du système de l'invention;

— la figure 2.a montre un capteur optique de déplacement pouvant être utilisé dans le système de l'invention;

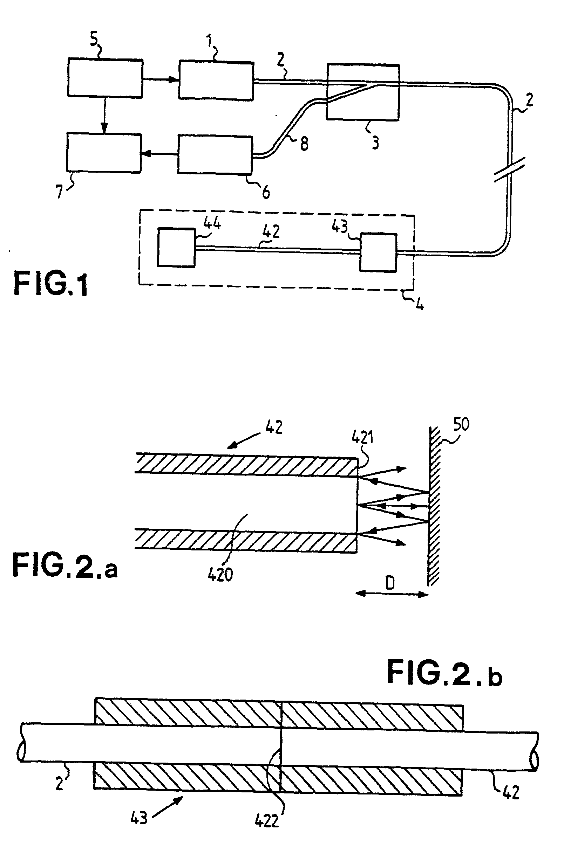

— la figure 2.b montre une des extrémités de la cavité résonante;

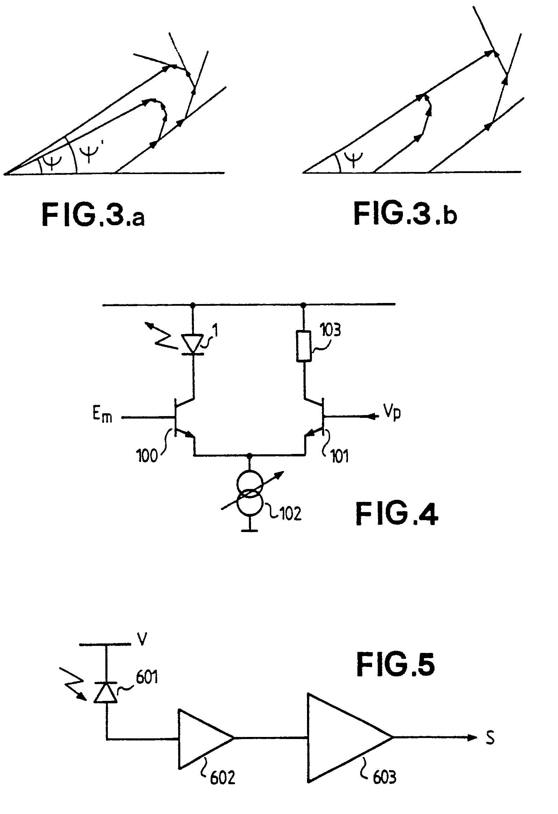

— les figures 3.a et 3.b sont des schémas vectoriels explicatifs du mode d'opération de la cavité résonnante;

— la figure 4 est un schéma de modulateur d'amplitude du signal émis par une diode électroluminescente; et

— la figure 5 est un schéma de détecteur utilisable avec le système de l'invention.

Le système de détection et/ou de mesure de la variation d'une grandeur montré à la figure 1 comprend une source de lumière 1, couplée à une fibre optique 2 elle-même connectée à une cavité résonnante 4 qui incorpore un élément transducteur. La lumière émise par la source 1 est modulée en amplitude par un circuit modulateur 5. L'utilisation d'une cavité résonnante, telle une cavité Fabry-Perrot, dans laquelle est incorporé un transducteur permet de réaliser la transformation de l'information de variation de l'intensité lumineuse, engendrée par l'élément transducteur en réponse à la variation de la grandeur à mesurer, en une information de phase. Cette information de phase est extraite à l'aide d'un détecteur 6 qui est couplé à la fibre optique 2 par la liaison optique 8 et le coupleur 3. un voltmètre vectoriel ou phasemètre 7 compare l'information de phase fournie par le détecteur 6 à la phase du signal de modulation délivré par le circuit modulateur 5. La cavité résonnante 4 est constituée par une fibre 42 dont les extrémités présentent des surfaces partiellement réfléchissantes. La cavité est couplée à la fibre 2 par un connecteur 43 et est terminée par un élément terminal 44. Cette cavité incorpore, selon l'invention, un transducteur réagissant à la variation de la graundeur à mesurer en modifiant l'intensité du signal circulant dans la fibre 42.

A titre d'exemple de transducteur, la figure 2.a monte schématiquement un capteur de position incorporé dans la cavité constituée par la fibre 42. Le transducteur, proprement dit, est réalisé à l'aide d'un miroir 50 situé à une distance D de l'extrémité de la fibre 42. La qu quantité de lumière, réinjectée dans le coeur 420 de la fibre 42 dépend directement de la distance D et, par suite, l'intensité du signal lumineux parcourant la fibre 42 est une mesure de la position du miroir 50. La cavité résonnante Fabry-Perrot est, comme on l'a vu précédemment, réalisée à l'aide d'une fibre optique 42 comportant à une extrémité le transducteur décrit ci-dessus et connecté, à l'autre extrémité, à la fibre 2 au moyen d'une ferrule 43. La face extrême 421 de la fibre 42 de même que l'interface 422 entre la fibre 2, constituant le moyen de transmission, et la fibre 42, constituant la cavité résonnante, peuvent être revêtues par un dépôt d'oxyde de silicium (SiO) ou de titane (TiO2) de manière à être partiellement réfléchissantes.

Bien que décrite dans le cadre d'une application dans laquelle la cavité résonnante est utilisée en réflexion, la présente invention est également applicable au cas où cette cavité est utilisée en transmission. La fibre de liaison 2 de la figure est alors prolongée au-delà de la cavité 4 jusqu'au détecteur 6. Le choix entre l'un et l'autre système sera dicté par l'application envisagée.

Les figures 3.a et 3.b montrent l'effet d'un changement d'état (fig. 3.a) ou d'une absence de changemenet d'état (fig. 3.b) du capteur sur la phase $\psi$ du signal circulant dans la cavité 4. La phase $\psi$ du signal périodique, de fréquence égale à la fréquence de modulation et circulant dans la cavité 42, peut être considérée comme la somme de plusieurs déphasages élémentaires produits lors des allers-retours successifs de la lumière dans la cavité après réflexion partielle sur les miroirs semi-réfléchissants 421 et 422. La cavité étant toujours la même, les directions respectives des phaseurs élémentaires restent les mêmes. Par contre, les longueurs respectives des phaseurs élémentaires sont affectées par une variation de l'intensité du signal lumineux engendrée par un changement dans la phase $\psi$ du signal résultant R (fig. 3.a). Cette variation de la phase $\psi$ est indépendante des fluctuations d'inensité du signal, que celles-ci soient dues à la source lumineuse 1 ou à la ligne de transmission 2.

On peut caractériser la cavité résonnante 4 par sa longueur électrique:

$$\beta = \frac{4\pi f nl}{c};$$

où f est la fréquence du signal de modulation, n est l'indice moyen de la fibre 42, l est la longueur de la cavité et c est la vitesse de la lumière. La sensibilité du système de la figure 1 est maximum lorsque $\beta$ est voisin de $\pi$, mais cette valeur correspond également à une intensité très faible du signal à mesurer de sorte qu'un compromis doit être fait pour que l'intensité du signal reçu par le détecteur soit suffisante tout en ayant la meilleure sensibilité possible.

La figure 4 montre le schéma d'un modulateur d'amplitude pour une source lumineuse constituée par une diode électroluminescente. Le montage de la figure 4 est celui d'un amplificateur différentiel à transistors bipolaires. Les émetteurs des transistors 100 et 101 sont reliés à une source de courant ajustable 102. La base du transistor 101 est reliée à une tension fixe Vp, tandis que son collecteur est relié à une tension d'alimentation V à travers une trésistance de polarisation 103. Le transistor 100 reçoit sur sa base le signal de modulation Em, ce qui entraîne une modulation du courant d'émetteur traversant la diode 1. Le signal de modulation peut être un signal périodique de type sinusoïdal ou impulsionnel.

La figure 5 montre le schéma du détecteur. Le courant produit par la photodiode 601 (diode PIN ou photodiode à avalanche) est appliqué à l'entrée d'un aplificateur à transconductance 602. L'amplificateur 602 réalise la transformation du courant produit par la diode 601 en une tension qui est appliquée à un amplificateur 603 dont la sortie S est reliée à une entrée du phasemètre 7 (fig. 1).

L'un des avantages du système de l'invention, dans lequel la modulation d'intensité est transformée en une information de phase, réside dans le fait que la détection peut se faire à bande très étroite avec un très bon rapport signal sur bruit.

Bien que l'invention ait été décrite dans le cadre d'un exemple particulier de réalisation, il est clair qu'elle est susceptible de modifications ou variantes sans sortir de son domaine. En particulier, d'autres types de capteurs peuvent être utilisés dès lors qu'ils sont capables d'engendrer une modulation du signal lumineux traversant la cavité résonnante. Des capteurs de pression, de température, etc, font partie des capteurs utilisables. Il est clair également que le système de l'invention peut incorporer plusieurs capteurs distribués sur la ligne optique.

## Revendications

1. Système optique de détection et de mesure de la variation d'une grandeur physique ou chimique comportant une source d'énergie lumineuse (1), modulée en amplitude, une fibre optique (2) reliée à ladite source lumineuse, un ou plusieurs capteurs en série capables d'engendrer une modulation de l'intensité du signal lumineux circulant dans la fibre en réponse à une variation de ladite grandeur physique ou chimique, des premiers moyens étant prévus pour transformer la modulation de l'intensité du signal lumineux en une variation de phase, et des seconds moyens étant prévus pour détecter, à l'extérieur des premiers moyens, la variation de la phase du signal à la fréquence de modulation, caractérisé en ce que le ou les capteurs sont incorporés dans lesdits premiers moyens et en ce que ces moyens sont constitués d'une cavité résonnante à ladite fréquence de modulation.

2. Système optique selon la revendication 1, caractérisé en ce que la cavité résonnante est constituée par une fibre optique (42) dont les extrémités sont revêtues d'un matériau semi-réfléchissant.

3. Système optique selon la revendication 1, caractérisé en ce que lesdits moyens pour détecter la phase du signal comprennent un détecteur de phase (6) recevant le signal extrait de ladite cavité et un phasemètre (7) pour comparer l'information de sortie dudit détecteur de phase et la phase du signal de modulation.

4. Système optique selon la revendication 3, caractérisé en ce que ledit détecteur de phase est couplé à ladite fibre optique par l'intermédiaire d'un coupleur (3), ladite cavité étant utilisée en mode de réflexion.

5. Système optique selon la revendication 3, caractérisé en ce que ladite cavité est utilisée en mode de transmission et ledit détecteur de phase est disposé après ladite cavité à laquelle il est relié par une fibre optique de liaison.

6. Système optique selon la revendication 1, caractérisé en ce que ladite fibre optique et ladite cavité résonnante sont constituées par des fibres monomodes.

7. Système optique selon la revendication 1, caractérisé en ce que ladite fibre optique et ladite cavité résonnante sont constituées par des fibres multimodes.

**Patentansprüche**

1. Optisches System für Erfassung und Messung der Veränderung einer physikalischen oder chemischen Größe, umfassend eine Quelle (1) amplitudenmodulierter Lichtenergie, eine an die Lichtquelle angeschlossene optische Faser, einen oder mehrere Fühler in Serie, fähig zum Erzeugen einer Intensitätsmodulation des in der optischen Faser zirkulierenden Lichtsignals in Abhängigkeit von einer Veränderung der genannten physikalischen oder chemischen Größe, wobei erste Mittel vorgesehen sind für das Umsetzen der Intensitätsmodulation des Lichtsignals in eine Phasenänderung und zweite Mittel vorgesehen sind für das Erfasen außerhalb der ersten Mittel, der Änderung der Phase des Signals bezüglich der Modulationsfrequenz, dadurch gekennzeichnet, daß der oder die Fühler in die ersten Mittel eingefügt sind und daß diese Mittel von einem bei der Modulationsfrequenz in Resonanz befindlichen Hohlraum gebildet sind.

2. Optisches System nach Anspruch 1, dadurch gekennzeichnet, daß der Resonanzhohlraum von einer optischen Faser (42) gebildet ist, deren Enden mit einem halbreflektierenden Material beschichtet sind.

3. Optisches System nach Anspruch 1, dadurch gekennzeichnet, daß die Mittel zum Erfassen der Phase des Signals einen Phasendetektor (6) umfassen, der das aus dem Hohlraum extrahierte Signal empfängt, und einen Phasenmesser (7) umfassen für den Vergleich der Ausgangsinformation des Phasendetektors und der Phase des Modulationssignals.

4. Optisches System nach Anspruch 3, dadurch gekennzeichnet, daß der Phasendetektor an die optische Faser über einen Koppler (3) angekoppelt ist, wobei der Hohlraum im Reflexionsmodus genutzt wird.

5. Optisches System nach Anspruch 3, dadurch gekennzeichnet, daß der Hohlraum im Transmissionsmodus genutzt wird und der Phasendetektor nach dem Hohlraum angeordnet ist, an den er über eine optische Verbindungsfaser angeschlossen ist.

6. Optisches System nach Anspruch 1, dadurch gekennzeichnet, daß die optische Faser und der Resonanzhohlraum von Monomodusfasern gebildet sind.

7. Optisches System nach Anspruch 1, dadurch gekennzeichnet, daß die optische Faser und der Resonanzhohlraum von Multimodusfasern gebildet sind.

**Claims**

1. Optical system for detecting and measuring a variation in a physical or chemical parameter comprising a light source (1) which is amplitude-modulated, an optical fibre (2) connected to said light source, one or more sensors connected in series and producing an intensity-modulated light signal in the fibre in response to the variation in said physical or chemical parameter, first means for transforming the intensity-modulation of said light signal into a variation in phase and second means for detecting on the outside of said first means, the variation in phase of the signal at the modulation frequency, said optical system being characterized in that said sensors are incorporated into said first means which are constituted by a cavity which is resonant at said modulation frequency.

2. An optical system according to claim 1, characterized in that said resonant cavity is formed by an optical fibre (42) having ends covered by a semi-reflective material.

3. An optical system according to claim 1, characterized in that said means for detecting the phase of said light signal comprise a phase detector means (6) for receiving said light signal extracted from said cavity and phase meter means (7) for comparing an output of said phase detector means with the phase of the modulation signal.

4. An optical system according to claim 3, characterized in that said phase detector means is coupled to said optical fibre by way of a coupler (3), said cavity being used in a reflection mode.

5. An optical system according to claim 3, characterized in that said cavity is used in a transmission mode and said phase detector is disposed after said cavity to which it is connected by an optical connecting fibre.

6. An optical system according to claim 1, characterized in that said optical fibre and said cavity are formed by single-mode optical fibres.

7. An optical system according to claim 1, characterized in that said optical fibre and said cavity are formed by multimode optical fibres.

FIG.1

FIG.2.a

FIG.2.b

**FIG.3.a**

**FIG.3.b**

**FIG.4**

**FIG.5**